# EUROPEAN PATENT APPLICATION

(11) **EP 3 641 357 A1**
(43) Date of publication of application: **22.04.2020**
(21) Application number: 18816836.3
(22) Date of filing: 11.06.2018
(51) Int. Cl.: H04W 4/24, H04M 15/00

(54) **CHARGING INFORMATION TRANSMISSION METHOD, CMF ENTITY AND COMPUTER-READABLE STORAGE MEDIUM**

(30) Priority: 12.06.2017 CN 201710445262
(71) Applicant: ZTE Corporation, Shenzhen, Guangdong 518057 (CN)
(72) Inventor: LIN, Kai, Shenzhen Guangdong 518057 (CN); YANG, Minggui, Shenzhen Guangdong 518057 (CN)
(74) Representative: Hervouet-Malbec, Sylvie
(86) International application number: PCT/CN2018/090656
(87) International publication number: WO 2018/228334

(57) **Abstract**

A charging information transmission method. A charging management function (CMF) entity is newly added into the 5th generation mobile communication technology architecture defined by the 3rd generation partnership project. The charging information transmission method comprises: a CMF entity receiving charging information reported by a functional entity to be charged and determining the type of the charging information; where the charging information is on-line charging information, the CMF entity forwarding the on-line charging information to a corresponding on-line charging centre; and where the charging information is off-line charging information, the CMF entity storing off-line charging information, for extraction by a corresponding off-line charging centre during charging.

## Description

### TECHNICAL FIELD

The present disclosure relates to, but is not limited to, the field of communication technology, and particularly relates to a charging information transmission method, a Charging Management Function (CMF) entity, and a computer-readable storage medium.

### BACKGROUND

The mobile communication technology has undergone a rapid development from voice to data services, which profoundly changes the lifestyle of people, and greatly promotes the rapid development of society and economy. The mobile internet and the internet of things, as rough driving forces for the development of future mobile communication, provide a promising prospect for the 5th generation mobile communication (5G) technology.

The 3rd Generation Partnership Project (3GPP) proposes a top-level architecture of 5G, which is substantially characterized by a "service-based" modular design. Compared with the traditional "request-answer" based network flow, the "service-based" design concept is expected to bring about a subversive design to the 5G system architecture. The 5G architecture proposed by 3GPP includes network function entities such as an Access and Mobility Management Function (AMF) entity, a Session Management Function (SMF) entity, and the like, where the AMF entity and the SMF entity need to fulfill a charging function and transmit charging information to a charging center while fulfilling their respective service management.

### SUMMARY

The following is a summary of the subject matter described in detail in the disclosure. This summary is not intended to limit the scope of the claims.

In practical deployment, if many network function entities requiring to be charged, such as AMF entities or SMF entities, are deployed, since various such network function entities are all linked to a charging center, interfaces are too dispersed and network links are too complex, which is inconvenient for subsequent charging maintenance by the operator.

The present disclosure provides a charging information transmission method, a CMF entity, and a computer-readable storage medium that can avoid charging outlet dispersion among various network function entities, and online and offline charging outlet dispersion within network function entities, thereby achieving a unified charging outlet.

Embodiments of the present disclosure provide a charging information transmission method in which a CMF entity is added into a 5th generation mobile communication technology architecture defined by the 3rd Generation Partnership Project. The charging information transmission method includes:
receiving, by the CMF entity, charging information reported by a function entity to be charged (to-be-charged function entity), and determining a type of the charging information;
forwarding, by the CMF entity when the charging information is online charging information, the online charging information to a corresponding online charging center; and
storing, by the CMF entity when the charging information is offline charging information, the offline charging information for extraction by a corresponding offline charging center upon charging.

In an exemplary embodiment, a Bx interface based on a preset file transfer protocol is provided at the CMF entity, and after the step of storing the offline charging information by the CMF entity, the method further includes:
transmitting, by the CMF entity, the offline charging information to the offline charging center based on the Bx interface when receiving, based on the Bx interface, a charging information acquisition request corresponding to the offline charging information and transmitted by the offline charging center.

In an exemplary embodiment, a Gy interface based on a preset authentication authority charging protocol is provided at the CMF entity, and the step of forwarding, by the CMF entity, the online charging information to the corresponding online charging center includes:
forwarding, by the CMF entity, the online charging information to the online charging center based on the Gy interface.

In an exemplary embodiment, an Ncmf interface based on a preset standard definition is provided at the CMF entity, and the step of receiving, by the CMF entity, charging information reported by the function entity to be charged includes:
receiving, by the CMF entity, charging information which is reported by the function entity to be charged based on the Ncmf interface.

In an exemplary embodiment, the offline charging information includes a charging data record, and the step of storing the offline charging information by the CMF entity includes:
calling, by the CMF entity, a data record generating plug-in corresponding to the offline charging center; and
generating and storing, by the CMF entity, a target charging data record meeting charging requirements of the offline charging center using the data record generating plug-in and according to the charging data record.

In an exemplary embodiment, before the step of generating and storing, by the CMF entity, the target charging data record meeting charging requirements of the offline charging center using the data record generating plug-in and according to the charging data record, the method further including:
performing pre-processing on the charging data record by the CMF entity; and
generating and storing, by the CMF entity after the pre-processing, the target charging data record meeting charging requirements of the offline charging center using the data record generating plug-in and according to the charging data record.

In an exemplary embodiment, the step of performing pre-processing on the charging data record by the CMF entity includes:
carrying out field detection and correction on the charging data record by the CMF entity.

In an exemplary embodiment, the online charging information includes at least one of a subscriber number, an international mobile subscriber identity, a service code, a rate, an access quantity, a discount rate, and an actual deduction amount.

Embodiments of the present disclosure further provide a CMF entity, the CMF entity including:
a memory storing a charging information transmission program;
a processor configured to execute the charging information transmission program to implement the steps of:
   receiving charging information reported by a function entity to be charged, and determining a type of the charging information;
   forwarding, when the charging information is online charging information, the online charging information to a corresponding online charging center; and
   storing, when the charging information is offline charging information, the offline charging information for extraction by a corresponding offline charging center upon charging.

Embodiments of the present disclosure further provide a computer-readable storage medium storing a charging information transmission program which, when executed by a processor, causes the program to implement the following steps:
receiving charging information reported by a function entity to be charged, and determining a type of the charging information;
forwarding, when the charging information is online charging information, the online charging information to a corresponding online charging center; and
storing, when the charging information is offline charging information, the offline charging information for extraction by a corresponding offline charging center upon charging.

Embodiments of the present disclosure further provide a computer-readable storage medium storing a charging information transmission program which, when executed, causes the above-mentioned charging information transmission method to be implemented.

In the embodiments of the present disclosure, by adding the CMF entity into the 5G architecture as an external unified charging outlet of the 5G architecture, the CMF entity collects online and offline charging information of one or more function entities to be charged (such as AMF entities, SMF entities and the like) under the 5G architecture and reports the collected information to the charging center collectively so that in the 5G architecture the connection between the one or more function entities to be charged and the charging center is simplified, and the operator does not need to maintain a complex link, thereby facilitating the charging maintenance by the operator.

Other aspects will become apparent upon reading and understanding the drawings and detailed description.

### BRIEF DESCRIPTION OF DRAWINGS

Fig. 1 is a schematic structural diagram of a first embodiment of the CMF entity of the present disclosure;
Fig. 2 is a schematic flowchart illustrating a first embodiment of a charging information transmission method according to the present disclosure;
Fig. 3 is a schematic diagram of the 5G architecture defined by 3GPP;
Fig. 4 is a schematic diagram of an extended 5G architecture in the first embodiment of the charging information transmission method of the present disclosure;
Fig. 5 is a schematic diagram illustrating connections between function entities to be charged and the CMF entity in the first embodiment of the charging information transmission method of the present disclosure;
Fig. 6 is a schematic diagram illustrating credit control by the CMF entity performing online charging in the first embodiment of the charging information transmission method of the present disclosure; and
Fig. 7 is a schematic flowchart illustrating the CMF entity performing offline charging in the first embodiment of the charging information transmission method of the present disclosure.

### DETAILED DESCRIPTION

Embodiments of the present disclosure will be described below with reference to the drawings.

A general solution of the embodiments of the present disclosure may include: by adding a CMF entity into the 5G architecture as an external unified charging outlet of the 5G architecture, the CMF entity collects online and offline charging information of one or more function entities to be charged (such as AMF entities, SMF entities and the like) under the 5G architecture and reports the information to the charging center collectively, so that in the 5G architecture, the connection between the one or more function entities to be charged and the charging center is simplified, and an operator does not need to maintain a complex link, thereby facilitating the charging maintenance by the operator.

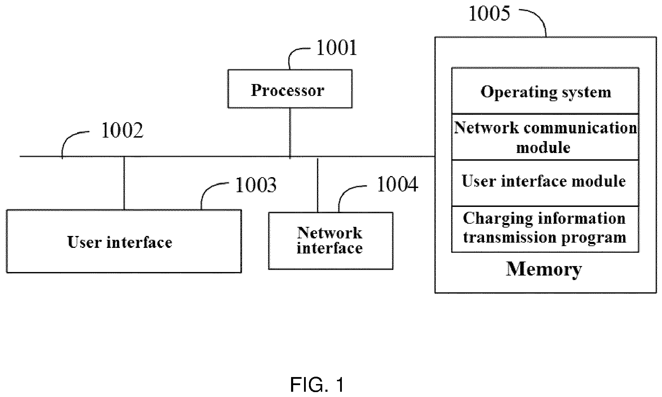

Reference is now made to Fig. 1 which is a schematic structural diagram of a CMF entity in a hardware operating environment involved in an embodiment of the present disclosure.

As shown in Fig. 1, the CMF entity may include: a processor 1001, such as a central processing unit (CPU), a network interface 1004, a user interface 1003, a memory 1005, and a communication bus 1002 provided to enable connection and communication between these components. The user interface 1003 may include a display, and an input unit such as a keyboard, and optionally, the user interface 1003 may further include a standard wired or wireless interface, or the like. The network interface 1004 may optionally include a standard wired or wireless interface (e.g., a Wireless Fidelity (Wi-Fi) interface). The memory 1005 may be a high-speed RAM memory or a stable memory (a non-volatile memory) such as a magnetic disk memory, and may optionally be a storage device separate from the above-mentioned processor 1001.

Those skilled in the art will appreciate that the CMF entity structure shown in Fig. 1 does not constitute a limitation to the CMF entity, and the CMF entity may include more or fewer components than shown, or include a combination of some components, or a different arrangement of components.

As shown in Fig. 1, in a first embodiment of the CMF entity of the present disclosure, the memory 1005, as a computer storage medium, may include an operating system, a network communication module, a user interface module, and a charging information transmission program.

In the CMF entity shown in Fig. 1, the network interface 1004 may be generally configured to be connected to and in data communication with a backend server; the user interface 1003 may be generally configured to be connected to and in data communication with a client (a user side); and the processor 1001 may be configured to call the charging information transmission program stored in the memory 1005 and perform the operations of:
receiving charging information reported by a function entity to be charged, and determining a type of the received charging information;
forwarding, when it is determined that the received charging information is online charging information, the online charging information to a corresponding online charging center; and
storing, when it is determined that the received charging information is offline charging information, the offline charging information for extraction by a corresponding offline charging center upon charging.

Optionally, the CMF entity is provided with a Bx interface based on a preset file transfer protocol, and the processor 1001 may be configured to call the charging information transmission program stored in the memory 1005 and perform the operation of:
transmitting the offline charging information to the corresponding offline charging center based on the Bx interface when receiving, based on the Bx interface, a charging information acquisition request which corresponds to the offline charging information and is transmitted by the offline charging center.

Optionally, the CMF entity is provided with a Gy interface based on a preset authentication authority charging protocol, and the processor 1001 may be configured to call the charging information transmission program stored in the memory 1005 and perform the operation of:
forwarding the online charging information to the corresponding online charging center based on the Gy interface.

Optionally, the CMF entity is provided with an Ncmf interface based on a preset standard definition, and the processor 1001 may be configured to call the charging information transmission program stored in the memory 1005 and perform the operation of:
receiving charging information reported based on the Ncmf interface and by the function entity to be charged.

Optionally, the offline charging information includes a charging data record, and the processor 1001 may be configured to call the charging information transmission program stored in the memory 1005 and perform the operations of:
calling a data record generating plug-in corresponding to the offline charging center; and
generating and storing a target charging data record meeting charging requirements of the offline charging center using the called data record generating plug-in and according to the charging data record.

Optionally, the processor 1001 may be configured to call the charging information transmission program stored in the memory 1005 and perform the operations of:
performing pre-processing on the charging data record; and
generating and storing, after the pre-processing, the target charging data record meeting charging requirements of the offline charging center using the called data record generating plug-in and according to the charging data record.

Optionally, the processor 1001 may be configured to call the charging information transmission program stored in the memory 1005 and perform the operation of:
carrying out field detection and correction on the charging data record.

Optionally, the online charging information includes at least one of a subscriber number, an international mobile subscriber identity, a service code, a rate, an access quantity, a discount rate, and an actual deduction amount.

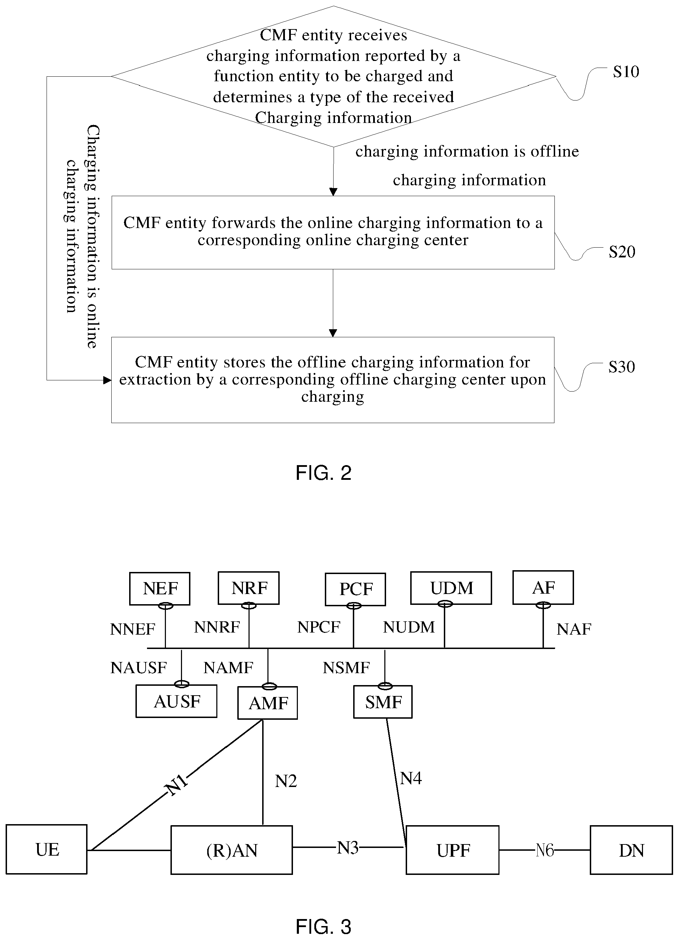

Optionally, the present disclosure further provides a charging information transmission method applied to a CMF entity. Referring to Fig. 2, in a first embodiment of the charging information transmission method of the present disclosure, the charging information transmission method may include the following steps S10 to S30:
At step S10, the CMF entity receives charging information reported by a function entity to be charged and determines a type of the received charging information.
At step S20, the CMF entity forwards, when the received charging information is online charging information, the online charging information to a corresponding online charging center.
At step S30, the CMF entity stores, when the received charging information is offline charging information, the offline charging information for extraction by a corresponding offline charging center upon charging.

Fig. 3 shows the 5G architecture related to the present disclosure. In the 5G architecture, the 3GPP defines a plurality of function entities, including a Network Exposure Function (NEF) entity, a Network Routing Function (NRF) entity, a Policy Control Function (PCF) entity, a Unified Data Management (UDM) entity, an Application Function (AF) entity, an Authentication Server Function (AUSF) entity, an Access Management Function (AMF) entity, a Service Management Function (SMF) entity, a User Equipment (UE), a Radio Access Network (RAN)/Access Network (AN), a User Plane Function (UPF) entity, and a Data Network (DN). The AMF entity is responsible for fulfilling not only the access management, but also a charging function and transmission of the charging information to the charging center; while the SMF entity needs to fulfill a charging function and transmission of the charging information to the charging center in addition to offering services such as session management. In this way, when many network function entities to be charged, such as AMF entities or SMF entities, are deployed, since the various network function entities to be charged are all linked to the charging center, the interfaces are too dispersed and the network links are too complex, which is inconvenient for subsequent charging maintenance by the operator.

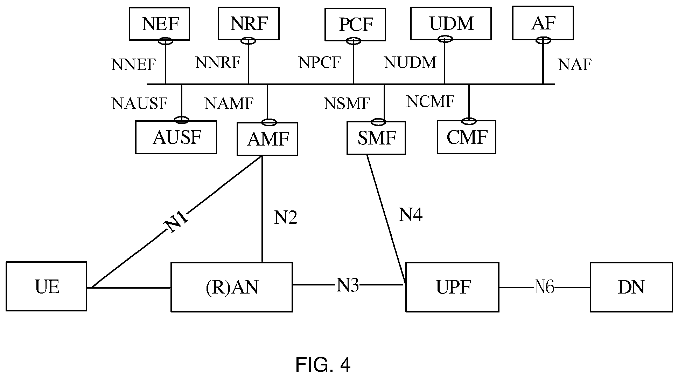

To this end, the present disclosure extends the 3GPP 23.501 protocol, and as shown in Fig. 4, a CMF entity may be added to the 5G structure corresponding to the 3GPP, and serves as a unified charging outlet.

It should be noted that to realize the collection and reporting of the charging information by the CMF entity, firstly, an interface for connection within the CMF entity may be defined at the CMF entity, that is, to define an interface of the CMF entity based on services under the 5G bus architecture as shown in Fig. 4 as an Ncmf interface (Service-based interface exhibited by CMF). A Gy interface may be defined at the CMF entity based on a preset authentication authority charging protocol, the Gy interface being used for communication with an online charging center (e.g., an online charging system, OCS) to perform credit control of online charging. The type of the authentication authority charging protocol is not particularly limited herein, and may be selected by those skilled in the art according to actual needs. For example, a Diameter protocol may be used in this embodiment. A Bx interface may be defined at the CMF entity based on a preset file transfer protocol, the Bx interface being used for communication with an offline charging center (e.g., a Billing Domain, BD) to report the charging information. The type of the file transfer protocol is not particularly limited herein, and may be selected by those skilled in the art according to actual needs. For example, a File Transfer Protocol (FTP) or File Transfer Access and Management (FTAM) protocol may be used in this embodiment.

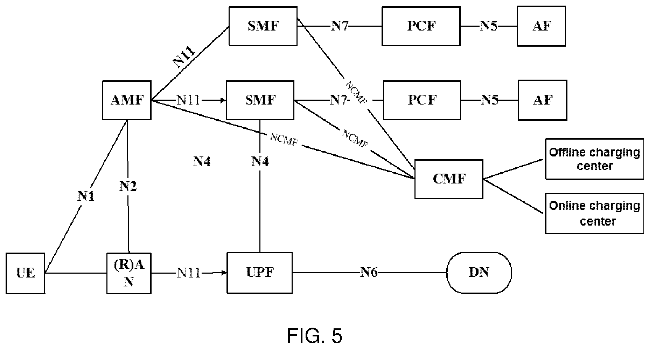

In this embodiment, to realize report of the charging information of each function entity to be charged, as shown in Fig. 5, firstly, the function entity to be charged may be connected to the CMF entity through an Ncfm interface. After the connection between the function entity to be charged and the CMF entity is established, when new charging information is generated, the function entity to be charged may report the generated charging information to the CMF entity through the Ncmf interface. Correspondingly, upon receiving the charging information reported by the function entity to be charged, the CMF entity may receive the charging information reported by the function entity to be charged based on the Ncmf interface.

After receiving the charging information reported by the function entity to be charged, in order to accurately report the received charging information to the corresponding charging center, the CMF entity may first determine the type of the received charging information to determine whether the charging information is online or offline.

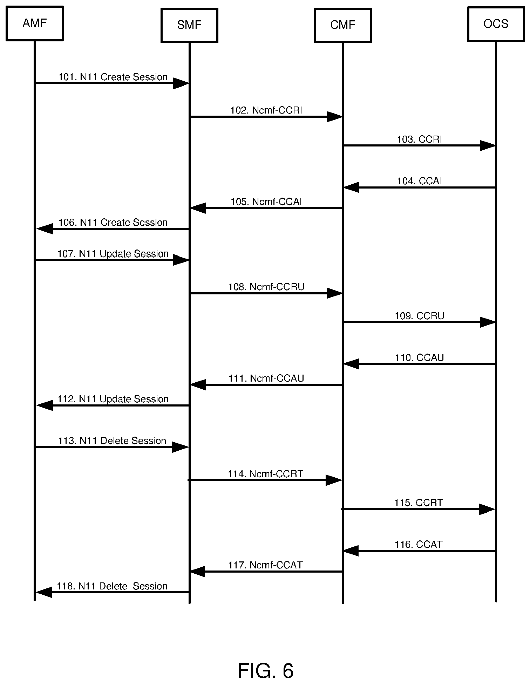

Optionally, the CMF entity identifies the type of the charging information according to a carrier carrying the charging information. Taking online charging information as an example, reference may be made to Fig. 6 which is a schematic diagram illustrating credit control of online charging performed by the CMF entity. The identification process may include the following steps S101 to S118.

At S101, a UE accesses, and the AMF entity transmits a Create Session message to the SMF entity.

At S102, the SMF entity transmits a Credit Control Request-Initial (CCRI) message of the Ncmf interface to the CMF entity to request charging authentication.

At S103, the CMF entity transmits the CCRI message to an OCS to request charging authentication.

At S104, the OCS authenticates successfully, and transmits a Credit Control Answer-Initial (CCAI) message to the CMF entity as an answer to the charging authentication.

At S105, the CMF entity receives the answer and transmits the CCAI message of the Ncmf interface to the SMF entity for service processing.

At S106, the SMF entity performs service processing of the CCAI and transmits a message to the AMF entity, and the session is successfully created.

At S107, the UE updates the session, and the AMF entity transmits an Update Session message to the SMF entity.

At S108, the SMF entity transmits a Credit Control Request-Update (CCRU) message of the Ncmf interface to the CMF entity to report a charging update request.

At S109, the CMF entity transmits the CCRU message to the OCS to report the charging update request.

At S110, the OCS processes the CCRU successfully, and transmits a Credit Control Answer-Update (CCAU) message to the CMF entity as an answer to the charging update request.

At S111, the CMF entity receives the answer and transmits the CCAU message of the Ncmf interface to the SMF entity for service processing.

At S112, the SMF entity performs service processing of the CCAU and transmits a message to the AMF entity, and the session is successfully updated.

At S113, the UE deletes the session, and the AMF entity transmits a Delete Session message to the SMF entity.

At S114, the SMF entity transmits a Credit Control Request-Terminate (CCRT) message of the Ncmf interface to the CMF entity to report a charging delete request.

At S115, the CMF entity transmits the CCRT message to the OCS to report the charging delete request.

At S116, the OCS processes the CCRT successfully, and transmits a Credit Control Answer-Terminate (CCAT) message to the CMF entity as an answer to the charging delete request.

At S117, the CMF entity receives the answer and transmits the CCAT message of the Ncmf interface to the SMF entity for service processing.

At S118, the SMF entity performs service processing of the CCAU and transmits a message to the AMF entity, and the session is successfully deleted.

As described above, when a function entity to be charged such as an AMF entity or an SMF entity reports the charging information, the function entity may carry the charging information in a Credit Control Request (CCR) for reporting. Correspondingly, in this embodiment, if the CMF entity receives charging information carried in a CCR, the CMF entity may determine the charging information as online charging information. On the other hand, if the received charging information is a charging data record, the CMF entity may determine the charging information as offline charging information.

After the type of the charging information is determined, the CMF entity may forward the online charging information to a corresponding online charging center if the received charging information is online charging information. Optionally, the CMF entity forwards the online charging information to the online charging center based on the Gy interface. The online charging information may include but is not limited to, a subscriber number, an international mobile subscriber identity, a service code, a rate, an access quantity, a discount rate, and an actual deduction amount.

On the other hand, if the received charging information is offline charging information, the CMF entity may store the offline charging information for the corresponding offline charging center to extract upon charging.

Optionally, after the step S30, the method further includes:
transmitting, by the CMF entity, the offline charging information to the offline charging center based on the Bx interface when receiving, based on the Bx interface, a charging information acquisition request corresponding to the offline charging information and transmitted by the offline charging center.

In this embodiment, while storing the offline charging information, the CMF entity may update a storage path of the offline charging information in a preset charging information directory. Therefore, when charging is performed by the offline charging center, the storage path of the offline charging information can be searched through the charging information directory, and a charging information acquisition request for acquiring the offline charging information can be initiated to the CMF entity.

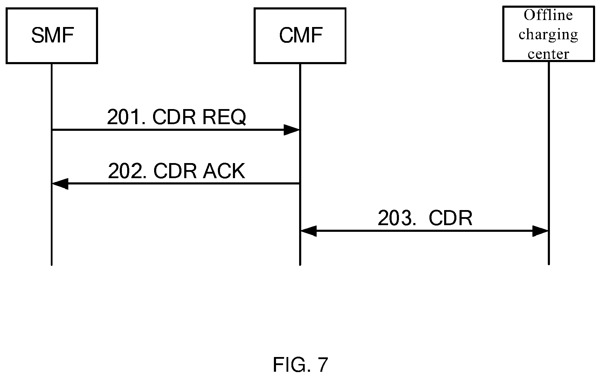

For example, referring to Fig. 7, the process of performing offline charging may include the following steps S201 to S203:
At S201, the SMF service-triggers, during the service process, offline charging information, i.e., a charging data record (CDR) such as a time data record, a flow data record, Radio Access Technology (RAT) updating and the like, and transmits the charging data record to the CMF entity.
At S202, the CMF entity stores the charging data record and returns an answer to the SMF entity.
At S203, the CMF entity provides a Bx interface for an offline charging center (Billing Domain) to perform extracting upon charging.

In the present disclosure, by adding the CMF entity into the 5G architecture as an external unified charging outlet of the 5G architecture, the CMF entity collects online and offline charging information of one or more function entities to be charged (such as AMF entities, SMF entities and the like) under the 5G architecture and reports the information to the charging center collectively, so that in the 5G architecture, the connection between the one or more function entities to be charged and the charging center is simplified, and the operator does not need to maintain a complex link, thereby facilitating the charging maintenance by the operator.

Optionally, based on the first embodiment, a second embodiment of the charging information transmission method of the present disclosure is provided. In this embodiment, the offline charging information may include a charging data record, and the step S30 may include:
calling, by the CMF entity, a data record generating plug-in corresponding to the offline charging center; and
generating and storing, by the CMF entity, a target charging data record meeting charging requirements of the offline charging center using the data record generating plug-in and according to the charging data record.

It may be noted that the charging data record may be user charging data generated by a user equipment during the process from start to end of a charging session in a service process, and may include but is not limited to, a subscriber number, an international mobile subscriber identity, a service code, a rate, an access quantity, a discount rate, and an actual deduction amount.

In this embodiment, the CMF entity may call a data record generating plug-in corresponding to the offline charging center from data record generating plug-ins prestored in the memory 1005, that is, call a data record generating plug-in meeting charging requirements of an operator accounting system to which the offline charging center belongs. Optionally, the CMF entity may call a data record generating plug-in meeting the charging requirements of the operator accounting system according to information such as the storage path, name, or code of the data record generating plug-in, or may call the data record generating plug-in in any other possible manner, which is not particularly limited herein.

Then, the CMF entity may generate and store a target charging data record meeting charging requirements of the offline charging center using the called data record generating plug-in and according to the charging data record.

Optionally, in this embodiment, before the step S10, the method further includes:
acquiring and storing a data record generating plug-in corresponding to the offline charging center.

In implementations, the CMF entity may acquire a data record generating plug-in corresponding to the offline charging center from other devices on the network by establishing a connection with these devices, or directly generate the data record generating plug-in according to the charging requirements of the operator accounting system of the offline charging center. The data record generating plug-in may be a text file that can be written in an Extensible Markup Language (XML) format or in other custom formats; the data record generating plug-in may be a link library file, such as a ".dll" file under a Windows platform, or an ".o" file under a Unix platform, and the like; and the data record generating plug-in may also be a computer-readable file, which is not particularly limited herein.

After acquiring the data record generating plug-in, the CMF entity may store the acquired data record generating plug-in in the memory 1005 for later calling.

Optionally, in order to ensure accuracy of the generated target charging data record, in this embodiment, before the step of generating and storing, by the CMF entity, the target charging data record meeting charging requirements of the offline charging center using the called data record generating plug-in and according to the charging data record, the method further including:
performing pre-processing on the charging data record by the CMF entity; and
generating and storing, by the CMF entity after the pre-processing, the target charging data record meeting charging requirements of the offline charging center using the called data record generating plug-in and according to the charging data record.

In this embodiment, before generating the target charging data record to be reported, the CMF entity may further perform pre-processing on the charging data record, and optionally, perform field detection and correction on the charging data record.

In implementations, the CMF entity may detect and correct a subscriber number field, a service code field, a rate field, an access quantity field, a discount rate field and an actual deduction amount field of the charging data record.

Taking detection and correction of the subscriber number field as an example, the CMF entity may detect the digital format and the number of bits of the subscriber number field. If the subscriber number field is abnormal, the CMF entity takes an IMSI field representing the international mobile subscriber identity in the charging data record as a key field to search for the subscriber record within a preset correction reference subscriber information base, and if a record with the same IMSI field value exists, the CMF entity corrects the subscriber number field in the charging data record by using the subscriber number field in the preset correction reference subscriber information base.

Optionally, the present disclosure further provides a charging information transmission device applicable to a CMF entity. In a first embodiment of the charging information transmission device of the present disclosure, in accordance with the first embodiment of the charging information transmission method, the charging information transmission device may include:
a receiving module configured to receive charging information reported by a function entity to be charged and determine a type of the received charging information;
a forwarding module configured to forward, when the received charging information is online charging information, the online charging information to a corresponding online charging center; and
a storage module configured to store, when the received charging information is offline charging information, the offline charging information for extraction by a corresponding offline charging center upon charging.

Fig. 3 shows the 5G architecture related to the present disclosure, in which the 3GPP defines a plurality of function entities, including a Network Exposure Function (NEF) entity, a Network Routing Function (NRF) entity, a Policy Control Function (PCF) entity, a Unified Data Management (UDM) entity, an Application Function (AF) entity, an Authentication Server Function (AUSF) entity, an Access Management Function (AMF) entity, a Service Management Function (SMF) entity, a User Equipment (UE), a Radio Access Network (RAN)/Access Network (AN), a User Plane Function (UPF) entity, and a Data Network (DN). The AMF entity is responsible for fulfilling not only access management, but also a charging function and transmission of the charging information to a charging center; while the SMF entity needs to fulfill a charging function and transmission of the charging information to the charging center in addition to offering services such as session management. In this way, when many network function entities to be charged, such as AMF entities or SMF entities, are deployed, since each of the network function entities to be charged is linked to the charging center, the interfaces are too dispersed and the network links are too complex, which is inconvenient for subsequent charging maintenance by the operator. In Fig. 3, the NEF entity is provided with an Nnef interface (represented by NNEF in Fig. 3), the NRF entity is provided with an Nnrf interface (represented by NNRF in Fig. 3), the PCF entity is provided with an Npcf interface (represented by NPCF in Fig. 3), the UDM entity is provided with an Nudm interface (represented by NUDM in Fig. 3), the AF entity is provided with an Naf interface (represented by NAF in Fig. 3), the AUSF entity is provided with an Nausf interface (represented by NAUSF in Fig. 3), the AMF entity is provided with an Namf interface (represented by NAMF in Fig. 3), and the SMF entity is provided with an Nsmf interface (represented by NSMF in Fig. 3).

To this end, the present disclosure extends the 3GPP 23.501 protocol, and as shown in Fig. 4, a CMF entity may be added into the 5G structure corresponding to the 3GPP as a unified charging outlet. In Fig. 4, the NEF entity is provided with an Nnef interface (represented by NNEF in Fig. 4), the NRF entity is provided with an Nnrf interface (represented by NNRF in Fig. 4), the PCF entity is provided with an Npcf interface (represented by NPCF in Fig. 4), the UDM entity is provided with an Nudm interface (represented by NUDM in Fig. 4), the AF entity is provided with an Naf interface (represented by NAF in Fig. 4), the AUSF entity is provided with an Nausf interface (represented by NAUSF in Fig. 4), the AMF entity is provided with an Namf interface (represented by NAMF in Fig. 4), the SMF entity is provided with an Nsmf interface (represented by NSMF in Fig. 4), and the CMF entity is provided with an Ncmf interface (represented by NCMF in Fig. 4).

It should be noted that to realize the collection and reporting of the charging information by the CMF entity, firstly, an interface for connection within the CMF entity may be defined at the CMF entity, that is, an interface of the CMF entity based on services under the 5G bus architecture as shown in Fig. 4 is defined as an Ncmf interface (Service-based interface exhibited by CMF). A Gy interface may be defined at the CMF entity based on a preset authentication authority charging protocol, the Gy interface being used for communication with an online charging center (e.g., an online charging system, OCS) to perform credit control of online charging, wherein the type of the authentication authority charging protocol is not particularly limited herein, and may be selected by those skilled in the art according to actual needs. For example, a Diameter protocol may be used in this embodiment. A Bx interface may be defined at the CMF entity based on a preset file transfer protocol, the Bx interface being used for communication with an offline charging center (e.g., a Billing Domain, BD) to report the charging information, wherein the type of the file transfer protocol is not particularly limited herein, and may be selected by those skilled in the art according to actual needs. For example, an FTP or FTAM protocol may be used in this embodiment.

In this embodiment, to report the charging information of each function entity to be charged, as shown in Fig. 5, firstly, the function entity to be charged may be connected to the CMF entity through an Ncfm interface (represented by NCMF in Fig. 5). After the connection between the function entity to be charged and the CMF entity is established, when new charging information is generated, the function entity to be charged may report the generated charging information to the CMF entity through the Ncmf interface. Correspondingly, upon receiving the charging information reported by the function entity to be charged, the receiving module may receive the charging information which is reported by the function entity to be charged based on the Ncmf interface.

After receiving the charging information reported by the function entity to be charged, in order to accurately report the received charging information to the corresponding charging center, the receiving module may further determine the type of the received charging information to determine whether the charging information is online or offline.

Optionally, the receiving module identifies the type of the charging information according to a carrier carrying the charging information. Taking online charging information as an example, reference may be made to Fig. 6 which is a schematic diagram illustrating credit control of online charging performed by the CMF entity (functioning based on the charging information transmission device). The identification process may include the following steps S101 to S118.

At S101, a UE accesses, and the AMF entity transmits a Create Session message to the SMF entity.

At S102, the SMF entity transmits a CCRI message of the Ncmf interface (Ncmf-CCRI, represented by NCMF-CCRI in Fig. 6) to the CMF entity to request charging authentication.

At S103, the CMF entity transmits the CCRI message to an OCS to request charging authentication.

At S104, the OCS authenticates successfully, and transmits a CCAI message to the CMF entity as an answer to the charging authentication.

At S105, the CMF entity receives the answer and transmits the CCAI message of the Ncmf interface (Ncmf-CCAI, represented by NCMF-CCAI in Fig. 6) to the SMF entity for service processing.

At S106, the SMF entity performs service processing of the CCAI and transmits a message to the AMF entity, and the session is successfully created.

At S107, the UE updates the session, and the AMF entity transmits an Update Session message to the SMF entity.

At S108, the SMF entity transmits a CCRU message of the Ncmf interface (Ncmf-CCRU, represented by NCMF-CCRU in Fig. 6) to the CMF entity to report a charging update request.

At S109, the CMF entity transmits the CCRU message to the OCS to report the charging update request.

At S110, the OCS processes the CCRU successfully, and transmits a CCAU message to the CMF entity as an answer to the charging update request.

At S111, the CMF entity receives the answer and transmits the CCAU message of the Ncmf interface (Ncmf-CCAU, represented by NCMF-CCAU in Fig. 6) to the SMF entity for service processing.

At S112, the SMF entity performs service processing of the CCAU and transmits the Update Session message to the AMF entity so that the session is successfully updated.

At S113, the UE deletes the session, and the AMF entity transmits a Delete Session message to the SMF entity.

At S114, the SMF entity transmits a CCRT message of the Ncmf interface (Ncmf-CCRT, represented by NCMF-CCRT in Fig. 6) to the CMF entity to report a charging delete request.

At S115, the CMF entity transmits the CCRT message to the OCS to report the charging delete request.

At S116, the OCS processes the CCRT successfully, and transmits a CCAT message to the CMF entity as an answer to the charging delete request.

At S117, the CMF entity receives the answer and transmits the CCAT message of the Ncmf interface (Ncmf-CCAT, represented by NCMF-CCAT in Fig. 6) to the SMF entity for service processing.

At S118, the SMF entity performs service processing of the CCAU and transmits the a message to the AMF entity, and the session is successfully deleted.

As described above, when a function entity to be charged such as an AMF entity or an SMF entity reports the charging information, the function entity may carry the charging information in a CCR for reporting. Correspondingly, in this embodiment, if the receiving module receives charging information carried in a CCR, the receiving module may determine the charging information as online charging information. On the other hand, if the received charging information is a charging data record, the receiving module may determine the charging information as offline charging information.

After the receiving module determines the type of the charging information, the forwarding module may forward the online charging information to a corresponding online charging center if the received charging information is online charging information. Optionally, the forwarding module forwards the online charging information to the online charging center based on the Gy interface. The online charging information may include but is not limited to, a subscriber number, an international mobile subscriber identity, a service code, a rate, an access quantity, a discount rate, and an actual deduction amount.

On the other hand, if the received charging information is offline charging information, the storage module may store the offline charging information for the corresponding offline charging center to extract upon charging.

Optionally, the forwarding module is further configured to transmit the offline charging information to the offline charging center based on the Bx interface when receiving, based on the Bx interface, a charging information acquisition request corresponding to the offline charging information and transmitted by the offline charging center.

In this embodiment, while storing the offline charging information, the storage module may update a storage path of the offline charging information in a preset charging information directory. Therefore, when charging is performed by the offline charging center, the storage path of the offline charging information can be searched through the charging information directory, and a charging information acquisition request for acquiring the offline charging information can be initiated to the forwarding module.

For example, referring to Fig. 7, the process of performing offline charging may include the following steps S201 to S203:
At S201, the SMF service-triggers, during the service process, offline charging information, i.e., a charging data record (CDR) such as a time data record, a flow data record, RAT updating and the like, and transmits the charging data record to the CMF entity.
At S202, the CMF entity stores the charging data record and returns an answer to the SMF entity.
At S203, the CMF entity provides a Bx interface for an offline charging center (a Billing Domain) to perform extracting upon charging.

Functions of the CMF entity may be implemented by a charging information transmission device.

In the present disclosure, by adding the CMF entity functioning through the charging information transmission device into the 5G architecture as an external unified charging outlet of the 5G architecture, the CMF entity collects online and offline charging information of one or more function entities to be charged (such as AMF entities, SMF entities and the like) under the 5G architecture and reports the information to the charging center collectively, so that in the 5G architecture, the connection between the one or more function entities to be charged and the charging center is simplified, and the operator does not need to maintain complex links, thereby facilitating the charging maintenance by the operator.

Optionally, based on the first embodiment, a second embodiment of the charging information transmission device of the present disclosure is provided. Corresponding to the second embodiment of the charging information transmission method, in this embodiment, the offline charging information may include a charging data record, and the storage module may be further configured to call a data record generating plug-in corresponding to the offline charging center, and may be configured to generate and store a target charging data record meeting charging requirements of the offline charging center using the data record generating plug-in and according to the charging data record.

It may be noted that the charging data record may be user charging data generated by a user equipment during the process from start to end of a charging session in a service process, and may include but is not limited to, a subscriber number, an international mobile subscriber identity, a service code, a rate, an access quantity, a discount rate, and an actual deduction amount.

In this embodiment, the storage module may call a data record generating plug-in corresponding to the offline charging center from data record generating plug-ins prestored in the memory 1005, that is, call a data record generating plug-in meeting charging requirements of the operator accounting system to which the offline charging center belongs. Optionally, the storage module may call a data record generating plug-in meeting the charging requirements of the operator accounting system according to information such as the storage path, name, or code of the data record generating plug-in, or may call the data record generating plug-in in any other possible manner, which is not particularly limited herein.

Then, the storage module may generate and store a target charging data record meeting charging requirements of the offline charging center using the called data record generating plug-in and according to the charging data record.

Optionally, in this embodiment, the charging information transmission device further includes an acquiring module configured to acquire and store a data record generating plug-in corresponding to the offline charging center.

In implementations, the acquiring module may acquire a data record generating plug-in corresponding to the offline charging center from other devices on the network by establishing a connection with these devices, or directly generate the data record generating plug-in according to the charging requirements of the operator accounting system of the offline charging center. The data record generating plug-in may be a text file that can be written in an XML format or in other custom formats; the data record generating plug-in may be a link library file, such as a ".dll" file under a Windows platform, or an ".o" file under a Unix platform, and the like; and the data record generating plug-in may also be a computer-readable file, which is not particularly limited herein.

After acquiring the data record generating plug-in, the acquiring module may store the acquired data record generating plug-in in the memory 1005 for later calling by the storage module.

Optionally, in order to ensure accuracy of the generated target charging data record, in this embodiment, the charging information transmission device further includes a pre-processing module configured to perform pre-processing on the charging data record; and
the storage module is further configured to generate and store, after the pre-processing, the target charging data record meeting charging requirements of the offline charging center using the called data record generating plug-in and according to the charging data record.

In this embodiment, before the storage module generates the target charging data record to be reported, the charging data record may be further preprocessed by the pre-processing module; and optionally, the pre-processing module performs field detection and correction on the charging data record.

In implementations, the pre-processing module may detect and correct a subscriber number field, a service code field, a rate field, an access quantity field, a discount rate field and an actual deduction amount field of the charging data record.

Taking detection and correction of the subscriber number field as an example, the CMF entity may detect the digital format and the number of bits of the subscriber number field. If the subscriber number field is abnormal, the CMF entity takes an IMSI field representing the international mobile subscriber identity in the charging data record as a key field to search for the subscriber record within a preset correction reference subscriber information base, and if a record with the same IMSI field value exists, the CMF entity corrects the subscriber number field in the charging data record by using the subscriber number field in the preset correction reference subscriber information base.

Optionally, the present disclosure further provides a computer-readable storage medium. In an embodiment, the computer-readable storage medium storing a charging information transmission program which, when executed by a processor 1001, causes the following operations to be implemented:
receiving charging information reported by a function entity to be charged, and determining a type of the received charging information;
forwarding, when the received charging information is online charging information, the online charging information to a corresponding online charging center; and
storing, when the received charging information is offline charging information, the offline charging information for extraction by a corresponding offline charging center upon charging.

Optionally, when executed by the processor 1001, the charging information transmission program further causes the following operation to be implemented:
transmitting the offline charging information to the corresponding offline charging center based on a Bx interface when receiving, based on the Bx interface, a charging information acquisition request corresponding to the offline charging information and transmitted by the offline charging center.

Optionally, when executed by the processor 1001, the charging information transmission program further causes the following operation to be implemented:
forwarding the online charging information to the corresponding online charging center based on a Gy interface.

Optionally, when executed by the processor 1001, the charging information transmission program further causes the following operation to be implemented:
receiving charging information which is reported by the function entity to be charged based on the Ncmf interface.

Optionally, when executed by the processor 1001, the charging information transmission program further causes the following operations to be implemented:
calling a data record generating plug-in corresponding to the offline charging center; and
generating and storing a target charging data record meeting charging requirements of the offline charging center using the called data record generating plug-in and according to the charging data record.

Optionally, when executed by the processor 1001, the charging information transmission program further causes the following operations to be implemented:
performing pre-processing on the charging data record; and
generating and storing, after the pre-processing, the target charging data record meeting charging requirements of the offline charging center using the called data record generating plug-in and according to the charging data record.

Optionally, when executed by the processor 1001, the charging information transmission program further causes the following operation to be implemented:
carrying out field detection and correction on the charging data record.

Optionally, the online charging information includes at least one of a subscriber number, an international mobile subscriber identity, a service code, a rate, an access quantity, a discount rate, and an actual deduction amount.

In an embodiment of the present disclosure, there is further provided a computer-readable storage medium storing a computer executable instruction which, when executed, causes the charging information transmission method to be implemented.

It may be noted that the term "include", "comprise" or any variant thereof used herein means to be non-exclusive so that a process, method, item or apparatus including a series of elements includes not only said elements, but also other elements not explicitly listed, or inherent elements of such processes, methods, items or apparatus. In the absence of more limitations, an element defined by "including a .." do not exclude the existence of additional identical elements in the process, method, item or apparatus including the element.

The sequence numbers of the embodiments of the present disclosure are for description only and do not represent preferences of the embodiments.

Through the description of the above embodiment, those skilled in the art can clearly understand that the method according to the above embodiment may be implemented by means of software plus a necessary general hardware platform. Obviously, it may also be implemented by hardware. Based on such understanding, the technical solutions of the present invention essentially or, in other words, a part thereof contributing to the known technique in the art, can be embodied in a form of a software product, wherein the software product is stored in a storage medium as described above (such as an ROM/RAM, a disk, or an optical disc) and includes a number of instructions to make a terminal device (which may be a mobile phone, a computer, a server, an air conditioner or a network device, etc.) to execute the methods of the various embodiments of the present disclosure.

Those of ordinary skill in the art will appreciate that all or some steps of the above described method, functional modules/units in the system and apparatus may be implemented as software, firmware, hardware, and suitable combinations thereof. In a hardware implementation, the division between the functional modules/units mentioned in the above description does not necessarily correspond to the division of physical components; for example, one physical component may have multiple functions, or one function or step may be performed cooperatively by several physical components. Some or all components may be implemented as software executed by a processor, such as a digital signal processor or microprocessor, or implemented as hardware, or implemented as an integrated circuit, such as an application specific integrated circuit. Such software may be distributed on a computer-readable medium which may include a computer storage medium (or non-transitory medium) and communication medium (or transitory medium). As is well known to those of ordinary skill in the art, the term computer storage medium includes volatile and nonvolatile, removable and non-removable medium implemented in any method or technology for storing information, such as computer-readable instructions, data structures, program modules or other data. A computer storage medium includes, but is not limited to, Random Access Memory (RAM), Read-Only Memory (ROM), Electrically Erasable Programmable Read-only Memory (EEPROM), flash memory or other memory technology, Compact Disc Read-Only Memory (CD-ROM), digital versatile disc (DVD) or other optical disc storage, magnetic cartridge, magnetic tape, magnetic disk storage or other magnetic storage devices, or may be any other medium used for storing the desired information and accessible by a computer. Moreover, it is well known to those skilled in the art that communication medium typically includes a computer-readable instruction, a data structure, a program module, or other data in a modulated data signal, such as a carrier wave or other transport mechanism, and may include any information delivery medium.

Those skilled in the art can understand that the technical solutions of the present application can be modified or equivalently replaced without departing from the spirit and scope of the technical solutions of the present application, which modifications and replacements all fall into the scoped covered by the claims of the present disclosure.

## Claims

1. A charging information transmission method, **characterized in that**, a charging management function, CMF, entity is added into a 5th generation mobile communication technology architecture defined by the 3rd Generation Partnership Project, the charging information transmission method comprising the steps of:
receiving, by the CMF entity, charging information reported by a function entity to be charged, and determining a type of the charging information;
forwarding, by the CMF entity when the charging information is online charging information, the online charging information to a corresponding online charging center; and
storing, by the CMF entity when the charging information is offline charging information, the offline charging information for extraction by a corresponding offline charging center upon charging.

2. The charging information transmission method according to claim 1, wherein
a Bx interface based on a preset file transfer protocol is provided at the CMF entity, and after the step of storing the offline charging information by the CMF entity, the method further comprises:
transmitting, by the CMF entity, the offline charging information to the offline charging center based on the Bx interface when receiving, based on the Bx interface, a charging information acquisition request corresponding to the offline charging information and transmitted by the offline charging center.

3. The charging information transmission method according to claim 1, wherein
a Gy interface based on a preset authentication authority charging protocol is provided at the CMF entity, and the step of forwarding, by the CMF entity, the online charging information to the corresponding online charging center comprises:
forwarding, by the CMF entity, the online charging information to the online charging center based on the Gy interface.

4. The charging information transmission method according to claim 1, wherein
an Ncmf interface based on a preset standard definition is provided at the CMF entity, and the step of receiving, by the CMF entity, charging information reported by the function entity to be charged comprises:
receiving, by the CMF entity, charging information which is reported by the function entity to be charged based on the Ncmf interface.

5. The charging information transmission method according to any one of claims 1 to 4, wherein the offline charging information comprises a charging data record, and the step of storing the offline charging information by the CMF entity comprises:
calling, by the CMF entity, a data record generating plug-in corresponding to the offline charging center; and
generating and storing, by the CMF entity, a target charging data record meeting charging requirements of the offline charging center using the data record generating plug-in and according to the charging data record.

6. The charging information transmission method according to claim 5, before the step of generating and storing, by the CMF entity, the target charging data record meeting charging requirements of the offline charging center using the data record generating plug-in and according to the charging data record, the method further comprising:
performing pre-processing on the charging data record by the CMF entity; and
generating and storing, by the CMF entity after the pre-processing, the target charging data record meeting charging requirements of the offline charging center using the data record generating plug-in and according to the charging data record.

7. The charging information transmission method according to claim 6, wherein the step of performing pre-processing on the charging data record by the CMF entity comprises:
carrying out field detection and correction on the charging data record by the CMF entity.

8. The charging information transmission method according to any one of claims 1 to 4, wherein the online charging information comprises at least one of a subscriber number, an international mobile subscriber identity, a service code, a rate, an access quantity, a discount rate, and an actual deduction amount.

9. A charging management function, CMF, entity, comprising:
a memory storing a charging information transmission;
a processor configured to execute the charging information transmission program to implement the charging information transmission method according to any one of claims 1 to 8.

10. A computer-readable storage medium storing a charging information transmission program which, when executed by a processor, causes the processor to implement the charging information transmission method according to any one of claims 1 to 8.
